(19) Europäisches Patentamt
European Patent Office
Office européen des brevets

(11) Publication number: 0 328 612 B1

(12) # EUROPEAN PATENT SPECIFICATION

(45) Date of publication of patent specification: 15.05.91 Bulletin 91/20

(51) Int. Cl.$^5$: C08F 4/68, C08F 10/02, C08F 2/34

(21) Application number: 88907411.8

(22) Date of filing: 15.08.88

(86) International application number: PCT/SE88/00413

(87) International publication number: WO 89/01496 23.02.89 Gazette 89/05

(54) PROCESS FOR THE GAS PHASE POLYMERISATION OF OLEFIN MONOMERS.

(30) Priority: 19.08.87 SE 8703211

(43) Date of publication of application: 23.08.89 Bulletin 89/34

(45) Publication of the grant of the patent: 15.05.91 Bulletin 91/20

(84) Designated Contracting States: AT BE CH DE FR GB IT LI LU NL SE

(56) References cited:
EP-A- 120 501
DE-A- 2 752 535
GB-C- 1 395 332
US-A- 3 072 630
US-A- 4 401 799
US-A- 4 514 514

(73) Proprietor: NESTE OY
Keilaniemi
SF-02150 Espoo 15 (FI)

(72) Inventor: PALMQVIST, Ulf
Västra Söbacken 70
S-444 00 Stenungsund (SE)
Inventor: JOHANSSON, Solveig
Haglingevägen 1
S-444 00 Stenungsund (SE)
Inventor: LINDGREN, Daniel
Sörkroken 16
S-440 74 Hjälteby (SE)
Inventor: KORVENOJA, Tarja
Päivarinnakatu 7A 20
SF-00250 Helsingfors (FI)

(74) Representative: Wiklund, Erik et al
AWAPATENT AB Box 5117
S-200 71 Malmö (SE)

EP 0 328 612 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for the gas phase polymerisation of olefin monomers, especially ethylene, using a supported Vanadium catalyst and a promoter. More particularly, the invention concerns the use of a promoter type that has not previously been utilised in the gas phase polymerisation, and the supply of the promoter by a technique which is new in gas phase polymerisation.

It is known to polymerise olefin monomers, especially ethylene, alone or in combination with other comonomers. The polymerisation can be carried out at different pressures as a so-called high pressure polymerisation or low pressure polymerisation. Furthermore, the polymerisation can be carried out in the liquid phase or in the gas phase. To facilitate and promote the polymerisation, it takes place in the presence of special catalysts, for example so-called Ziegler catalysts for low pressure polymerisation of α-olefins, such as ethylene. To further improve the activity of Ziegler catalysts with vanadium as the active metal, so-called promoters are usually added. In gas phase polymerisation, these promoters consist of volatile low-molecular chlorinated compounds that are added to the polymerisation reactor where they are evaporated. The use of volatile promoters evaporated in the reactor is necessary in order to achieve a uniform distribution of the promoter in the reactor. This limits the selection of promoter compounds and also implies that the vent gases from the reactor contain chlorine leading to environmental problems. Among conventional promoters, mention may be made of chloroform, dichloromethane and carbon tetrachloride.

British patent specification 1,489,410 is an example of prior art technique. This patent specification relates to a vanadium-based catalyst composition for gas phase polymerisation of especially ethylene. In a number of the polymerisation tests described in this patent specification, a promoter was added to the polymerisation reactor. The promoter consisted of halogenated alkanes, more particularly dichloromethane, chloroform, carbon tetrachloride and monofluorotrichloromethane. The promoter was added in a an amount of 100 mmol of halogenated alkane per mmol of vanadium in the catalyst, and per hour.

Another example of the above-mentioned prior art technique is European patent specification 0,110,605 which discloses the preparation of a vanadium-based catalyst for polymerisation of especially ethylene. Also this patent specification discloses the use of haloalkanes as promoter in the polymerisation, the promoter being added directly to the polymerisation reactor. In the Examples of this patent specification, use is made of chloroform as promoter, and it appears that for gas phase polymerisation use was made of about 40 mmol of chloroform per mmol of vanadium and hour.

EP 0,120,501, finally, relates to the gas phase polymerisation of ethylene, using a supported vanadium catalyst. The catalyst composition comprises a carrier with precursor, cocatalyst and promoter. The precursor consists of a vanadium compound, such as the reaction product of $VCl_3$ and tetrahydrofuran, and a modifier, such as diethyl aluminium chloride. The cocatalyst consists of a trialkyl aluminium compound, such as triisobutyl aluminium. The promoter is halogenated hydrocarbon having up to 7 carbon atoms, preferably at most 2 carbon atoms. The promoter most preferred and used exclusively in the Examples is chloroform. It appears from one passage in EP 0,120,501 that the promoter can be added to the supported precursor before and/or during the polymerisation reaction. However, there is no exemplification whatsoever of adding the promoter to the supported precursor before the polymerisation reaction, and in all of the Examples utilising a promoter, the promoter is added in conventional manner to the reactor during polymerisation, and we therefore find that EP 0,120,501 gives no example of promoter addition, let alone the addition of a high-boiling promoter, to a supported catalyst prior to polymerisation.

In addition to the above-mentioned prior art technique, we would mention that it is previously known in and per se, in slurry polymerisation of olefins, to utilise specific high-boiling halogenated hydrocarbons, such as hexachloropropylene, butyl chloride, benzotrichloride, and we refer in this respect to GB 1,395,332, U.S. 3,072,630, U.S. 4,514,514, DE 2,752,535 and U.S. 4,401,799. One reason why such promoters have not heretofore been utilised in gas phase polymerisation, is the above-mentioned indispensible requirement for gas phase polymerisation that the promoter must be volatile so that it evaporates in the polymerisation reactor and thus is uniformly distributed in the reactor.

We have now found, in the present invention, a process by which it is possible to utilise also for gas phase polymerisation high-boiling halogenated hydrocarbons that are solid or liquid under the conditions in the polymerisation reactor, whereby the possibilities of selecting suitable promoters for gas phase polymerisation of olefins have increased drastically. The invention also makes it easier to achieve the desired proportions between catalyst and promoter, to maintain these proportions unitarily in the reactor without undesired variations, with the ensuing risk of local overheatings in the reactor, and to minimise or eliminate tie emission of chlorine-containing exhaust gases.

In comparison with the promoters hitherto used in the gas phase polymerisation of olefins, the chlorinated hydrocarbon compounds utilised for the process according to the present invention also bring the advantage

that they need not be supplied in the usual high contents. Thus, mol ratios as low as from about 2 : 1 to about 20 : 1, preferably about 5 : 1 to about 15 : 1, between the promoter and the catalyst metal afford a satisfactory catalyst activity in the process according to the invention, whereas gas phase polymerisation according to prior art technique utilised the promoters in far higher mol ratios of about 20 : 1 and up to about 100 : 1, as in the above-mentioned British patent specification 1,489,410.

According to the invention, the problem at issue is solved by adding the promoter to the supported catalyst already before the catalyst is supplied to the reactor. More specifically, the promoter which is liquid or has been made liquid by heating or dissolving in an organic solvent, is mixed with the supported catalyst and combined therewith to form a dry free-flowing powder. This is preferably carried out such that the liquid promoter is added to the finished pulverulent catalyst and absorbed thereby in a balanced amount, while maintaining the composition in the form of a free-flowing powder. Alternatively, the catalyst can be slurried in the promoter, whereupon the slurry is dried to a free-flowing powder containing absorbed promoter.

The invention thus provides a process for the gas phase polymerisation of olefin monomers, especially ethylene, using a supported Vanadium catalyst and a promoter. The process is characterised in that the promoter is added to the catalyst before the latter is supplied to the polymerisation reaction, and that a high-boiling halogenated hydrocarbon is utilised as promoter, the hydrocarbon being solid or liquid at ambient pressure throughtout the temperature range 20-110°C and being selected from the group consisting of

a) halogenated alkanes having the formula
$C_nH_{2n+2-z-y}(OH)_yX_z$ wherein
X = Cl, Br, F
n = 2-25
y = 0 or 1
$1 \leq z \leq 2n+2$

b) halogenated cycloalkanes having the formula
$C_nH_{2n-z}X_z$wherein
X = Cl, Br, F
n = 5-12
z = 1-12

c) monomeric or polymeric form of halogenated alkene monomers having the formula
$C_nH_{2n-z}X_z$ wherein
X = Cl, Br, F
n = 2-25
$1 \leq z \leq 2n$.

Further characteristic features of the invention will appear from the following specification and the claims.

As has been mentioned before, the process according to the invention utilises a high-boiling halogenated hydrocarbon as promoter, implying that the promoter at ambient pressure, i.e. 101 kPa, is solid or liquid in the temperature range 20-110°C.

Even though the halogen substituent of the promoter compound according to the invention may be freely selected among chloride, bromine and fluorine, it is preferred that the promoter is a chlorinated hydrocarbon.

The degree of halogenation of the promoter compound is not critical, but the promoter compound must contain at least one halogen atom per molecule. Preferably, the promoter compound is more strongly halogenated so that at least 50% of the original hydrogen atoms of the hydrocarbon compound are substituted with halogen. The promoter compounds most preferred at present are perhalogenated compounds or almost perhalogenated compounds.

When the promoter compound is selected among halogenated alkanes (a) having the formula

$$C_nH_{2n+2-z-y}(OH)_Y X_z$$

it is preferred that X is Cl, i.e. that the compound is chlorinated. The compound may contain 2-25 carbon atoms, but 2-5 or 14-22 carbon atoms are preferred. The number of halogen atoms may vary from at least one halogen atom per molecule up to perhalogenated compounds, and the completely or amost completely perhalogenated compounds, i.e. compounds wherein z is 2n + 1 or 2n + 2 in the above formula, are those most preferred at present. Besides the halogen atoms, the compounds are generally unsubstituted, but they may be substituted with an OH group (y = 1 in the above formula).

As has been shown above, the promoter compounds of the present invention which are selected among halogenated alkanes, are derived from ethane, propane, butane, pentane, hexane, heptane etc., and as examples of such promoter compounds, mention may be made of pentachloroethane, hexachloroethane, heptachloropropane, octachloropropane, and chlorinated paraffin hydrocarbons having 11-22 carbon atoms,

preferably 14-22 carbon atoms, and trichloroethanol.

Of these promoter compounds, pentachloroethane, heptachloropropane, octachloropropane and chloroparaffins in combination with chloroform are those which are most preferred at present.

The chlorine content of the chlorinated paraffin hydrocarbons is generally about 40-70% by weight, and in the present invention these hydrocarbons are preferably added to the catalyst in an amount of about 6-50% by weight, based on the silica support. Expressed in molar ratio between the chlorine of the paraffin hydrocarbon and the vanadium of the catalyst, the chlorinated paraffin hydrocarbons are preferably added in a ratio of from about 1 : 1 to about 7 : 1, preferably from about 1 : 1 to about 4 : 1.

When the promoter compound is selected among halogenated cycloalkanes having the formula

$$C_nH_{2n-z}X_z$$

it is also preferred that X is Cl. The compound may contain 5-12 carbon atoms, but it is preferred that it contains 6 carbon atoms, i.e. that it is derived from cyclohexane. The number of halogen atoms may vary from at least one halogen atom per molecule up to perhalogenated compounds. The most preferred compound is hexachlorocyclohexane.

When the promoter compound is selected among monomeric or polymeric forms of halogenated alkene monomers having the formula

$$C_nH_{2n-z}H_z$$

it is preferred that X is Cl. The monomeric compound may contain 2-25 carbon atoms, i.e. it may be derived from ethylene, propylene, butene, pentene, hexene, heptene, octene etc. Promoter compounds of low-molecular alkene monomers having 2-5 carbon atoms are preferred, and those having 2-3 carbon atoms are most preferred at present. The number of halogen atoms may vary from at least one halogen atom per molecule to perhalogenated compounds, and as examples mention may be made of tetrachloroethylene, hexachloropropylene, and polymeric forms, such as polyvinyl chloride.

The promoter in the process according to the invention may be used alone or in combination with other promoter compounds.

As has been mentioned before, prior art promoter compounds for gas phase polymerisation are supplied directly to the polymerisation reactor. In contrast to this, the promoter in the process according to the invention is supplied to the catalyst before the latter is introduced into the polymerisation reactor, whereby it is easier to obtain the desired proportions between promoter and catalyst as well as a uniform and correct dosing of both the promoter and the catalyst since these are spplied simultaneously to the reactor.

In principle, the promoter can be added to the catalyst in any suitable manner whatsoever. It is preferred to add to the dry catalyst composition which includes a catalyst compound supported by a porous carrier which usually consists of silica, a balanced amount of the promoter which is liquid or has been made liquid by dissolution in an organic solvent, while maintaining the catalyst composition in the form of an easily handled free-flowing powder..

A number of Examples of the invention are given below. The Examples are intended merely to illustrate the invention and must not be interpreted as a limitation of the scope thereof.

In the Examples the melt index (MI) has been determined using ISO-R-292.

MI is used for determining the flow characteristics of the polyethylene at 190°C and constant load. The melt index indicates the number of grams of material extruded through an orifice in 10 min. at constant temperature and load. $MI_{21}$ indicates the melt index with a load of 21.6 kg. MI has the unit g/10 min. or dg/min. where dg stands for decigram.

MFR stands for "melt flow ratio", i.e. a quotient between different melt indexes, for example

$$MFR_{21/5} = \frac{MI_{21}}{MI_5}.$$

MFR which is without denomination, is frequently proportional to the molecular weight distribution (MWD), i.e. the distribution of the length of the polyethylene chains.

EXAMPLE 1

687 g silica (Davison silica 955, activated at 600°C) was slurried in 2 litres of pentane. 1122 ml of 10.7% TEA solution was added to the pentane slurry in batches and allowed to react for 1 hour. The catalyst was prepared under inert conditions (nitrogen gas). To the slurry was added 22.1 ml of vanadium oxytrichloride which was allowed to react for 50 min. at room temperature. The catalyst was then dried at 45°C with percolation of nitrogen gas, whereby a dry pulverulent catalyst was obtained. After that 246 ml of pentachloroethane was added dropwise and mixed with the catalyst until all pentachloroethane had been absorbed by the catalyst. This amount of pentachloroethane corresponds to a molar ratio 9 : 1 between promoter and vanadium. The resulting catalyst composition was then used for polymerisation of ethylene.

The polymerisation was carried out in the gas phase in a pilot reactor. The production was about 8.5 kg/h. The reactor temperature was 90°C. The total pressure in the reactor was 18 bars. The molar ratio during polymerisation was 0.063 between hydrogen and ethylene, and 0.023 between butene and ethylene. The polyethylene had the following characteristics :

$MI_{21}$ = 13.6
$MFR_{21/5}$ = 23.6
Density = 950.8 $kg/m^3$
Ash content = 536 ppm

| Particle size distribution | Mesh | % |
|---|---|---|
| | ≥ 10 | 0 |
| | ≥ 20 | 14.7 |
| | ≥ 40 | 63.2 |
| | ≥ 60 | 6.0 |
| | ≥120 | 15.6 |
| | ≥200 | 0.4 |
| | <200 | 0.1 |

Average particle size 0.66 mm
Bulk density 425 $kg/m^3$

EXAMPLE 2

718 g of silica (Davison silica 955, activated at 600°C) was slurried in 2.5 l of pentane. 1231 ml of 11.2% TEA solution was added to the pentane slurry in batches and allowed to react for 1 hour. The catalyst was prepared under inert conditions (nitrogen gas). To the slurry 27.9 ml of vanadium oxytrichloride was added which was allowed to react for 50 min. at room temperature. Then 72 g of chloroparaffin dissolved in 80 ml of pentane was added dropwise to the catalyst under agitation until all chloroparaffin had been absorbed by the catalyst. This amount of chloroparaffin 40 G (15-16 carbon atoms ; 39.5-40.5% by weight chlorine content ; Producer Hüls) is 10% calculated on the amount of silica. This corresponds to a molar ratio between chlorine and vanadium of 2.8 : 1. The catalyst was then dried at 45°C with percolation of nitrogen gas, whereby a dry pulverulent catalyst was obtained. 207 ml of chloroform was added dropwise under agitation of the catalyst and mixed with the catalyst until all chloroform had been absorbed by the catalyst. The amount of chloroform corresponds to a molar ratio of 9 : 1 between chloroform and vanadium. The resulting catalyst composition was then used for polymerisation of ethylene.

The polymerisation was carried out in the gas phase in a pilot reactor. The production was 8.6 kg/h. The reactor temperature was 93.3°C. The total pressure in the reactor was 18.3 bars. The molar ratio between hydrogen and ethylene during polymerisation was 0.036, and between hexene and ethylene 0.039. The polyethylene had the following characteristics :

| | | | |
|---|---|---|---|
| $MI_{21}$ | = 12.2 | | |
| $MFR_{21/5}$ | = 26.9 | | |
| Density | = 947.0 kg/m$^3$ | | |
| Ash content | = 499 ppm | | |
| Particle size distribution | | Mesh | % |
| | | ≥ 10 | 0.1 |
| | | ≥ 20 | 16.0 |
| | | ≥ 40 | 60.1 |
| | | ≥ 60 | 12.9 |
| | | ≥120 | 10.0 |
| | | ≥200 | 0.6 |
| | | <200 | 0.3 |
| Average particle size | 0.68 mm | | |
| Bulk density | 378 kg/m$^3$ | | |

Using, as promoter, a mixture of chlorofrom and chloroparaffin brings the advantage of a higher activity than if chloroform alone is used.

Chloroparaffins are able to dissolve chloroform and to "retain the chloroform" at temperatures far above the boiling point of chloroform. Chloroparaffin prevents the catalyst from giving off chloroform during storage and transport.

Since the mixture of chloroform and chloroparaffin gives a more active catalyst, the amount of promoter can be reduced, whereby the total amount of chlorine in the finished material is reduced.

EXAMPLE 3

424 g of silica (Davison silica 955, activated at 600°C) was slurried in 1.3 l of pentane. 629 ml of 10.7% TEA solution was added to the pentane slurry in batches and allowed to react for 1 hour. The catalyst was prepared under inert conditions (nitrogen gas). To the slurry 12.4 ml of vanadium oxytrichloride was added which was allowed to react for 50 min. at room temperature. Then 181 g of pulverulent hexachloroethane was added to the slurry of the catalyst in pentane. The amount of hexachloroethane corresponds to a molar ratio of 6 : 1 between promoter and vanadium. The temperature was increased to 45°C. The mixture was stirred for 1 hour. The catalyst was then dried at 45°C with percolation of nitrogen gas, whereby a dry pulverulent catalyst was obtained. The resulting catalyst composition was then used for polymerisation of ethylene.

Polymerisation was carried out in the gas phase in a pilot reactor. The reactor temperature was 90.0°C. The temperature of the gas mixture to the reactor was 88°C. The total pressure in the reactor was 12.6 bars. The molar ratio between hydrogen and ethylene during polymerisation was 0.072. No comonomer was used. The polyethylene had the following characteristics :

$MI_{21}$ = 9.2
$MFR_{21/5}$ = 22.2
Density = 956.2 kg/m$^3$
Ash content = 988 ppm
Particle size distribution

| Mesh | % |
|---|---|
| ≥ 10 | 0.2 |
| ≥ 20 | 18.3 |
| ≥ 40 | 52.2 |
| ≥ 60 | 22.1 |
| ≥140 | 7.0 |
| ≥200 | 0.6 |
| <200 | 0.6 |

Average particle size 0.68 mm
Bulk density 438 kg/m$^3$

EXAMPLE 4

673 g of silica (Davison silica 955, activated at 600°C) was slurried in 2.0 1 of pentane. 972 ml of 11.2% TEA solution was added to the pentane slurry in batches and allowed to react for 1 hour. The catalyst was prepared under inert conditions (nitrogen gas).

To the slurry were added 21.6 ml of vanadium oxytrichloride which was allowed to react for 50 min. at room temperature. The amount of vanadium oxytrichlorile corresponds to 0.33 mmol/g of silica. The catalyst was then dried at 45°C with percolation of nitrogen gas, whereby a dry pulverulent catalyst was obtained.

270 ml of pentachloroethane was added dropwise under agitation of the catalyst and mixed with the catalyst until all pentachloroethane had been absorbed by the catalyst. The amount of pentachloroethane corresponds to a molar ratio of 10 : between pentachloroethane and vanadium. 159 g chloroform was added dropwise under agitaiton of the catalyst and mixed with the catalyst until all chloroform had been absorbed by the caralyst. The amount of chloroform corresponds to a molar ratio of 6 : between chloroform and vanadium. The resulting catalyst composition was then used for polymerisation of ethylene.

Polymerisation was carried out in the gas phase in a pilot reactor. The reactor temperature was 90.0°C. The temperature of the reaction mixture to the reactor was 85°C. The total pressure in the reactor was 18 bars. The molar ratio between hydrogen and ethylene during polymerisation was 0.153, and between hexene and ethylene 0.026. The polyethylene had the following characteristics :

$MI_{21}$ = 90.0
$MFR_{21/2}$ = 114
Density = 947.8 $kg/m^3$

Particle size distribution

| Mesh | % |
|---|---|
| ≥ 10 | 0.2 |
| ≥ 20 | 10.0 |
| ≥ 40 | 61.4 |
| ≥ 60 | 18.7 |
| ≥120 | 9.0 |
| ≥200 | 0.6 |
| <200 | 0.0 |

Bulk density 403 $kg/m^3$

EXAMPLE 5

710 g of silica (Davison silica 955, activated at 600°C) was slurried in 2.5 l of pentane. 1037 ml of 11.2% TEA solution was added to the pentane slurry in batches and allowed to react for 1 hour. The catalyst was prepared under inert conditions (nitrogen gas). To the slurry was added 22.8 ml of vanadium oxytrichloride which was allowed to react for 50 min. at room temperature. Then 601 g of heptachloropropane dissolved in 2400 ml of pentane was added dropwise to the catalyst under agitation. This amount of heptachloropropane corresponds to a molar ratio between promoter and vanadium of 9 : 1. The catalyst was then dried at 45°C with percolation of nitrogen gas, whereby a dry pulverulent catalyst was obtained. The resulting catalyst composition was then used for polymerisation of ethylene.

Polymerisation was carried out in the gas phase in a pilot reactor. The reactor temperature was 93.3°C. The temperature of the circulation gas to the reactor was 88°C. The total pressure in the reactor was 17.8 bars. The molar ratio between hydrogen and ethylene during polymerisation was 0.034, and between butene and ethylene 0.020. The polyethylene had the following characteristics :

$MI_{21}$ = 8.9
$MFR_{21/5}$ = 24.8
Density = 944.0 $kg/m^3$
Ash content = 315 ppm

Particle size distribution

| Mesh | % |
|---|---|
| ≥ 10 | 0.2 |
| ≥ 20 | 28.0 |
| ≥ 40 | 53.2 |
| ≥ 60 | 10.1 |
| ≥120 | 7.3 |
| ≥200 | 0.8 |
| <200 | 0.4 |

Average particle size 0.79 mm
Bulk density 425 $kg/m^3$

## Claims

1. In a process for the gas phase polymerisation of olefin monomers, especially ethylene, using a supported Vanadium catalyst and a promoter, the improvement comprising that the promoter is added to the catalyst before the latter is supplied to the polymerisation reaction, and that a high-boiling halogenated hydrocarbon is utilised as promoter, the hydrocarbon being solid or liquid at ambient pressure throughtout the temperature range 20-150°C and being selected from the group consisting of

a) halogenated alkanes having the formula

$C_nH_{2n+2-z-y}(OH)_yX_z$ wherein

X = Cl, Br, F

n = 2-25

y = 0 or 1

$1 \leq z \leq 2n + 2$

b) halogenated cycloalkanes having the formula

$C_nH_{2n-z}X_z$ wherein

X = Cl, Be, F

n = 5-12

z = 1-12

c) monomeric or polymeric form of halogenated alkene monomers having the formula

$C_nH_{2n-z}X_z$ wherein

X = Cl, Br, F

n = 2-25

$1 \leq z \leq 2n$.

2. A process as claimed in claim 1, **characterised** in that the promoter is added to the catalyst in an amount such that the molar ratio between the promoter and the catalyst metal is from about 2 : 1 to 20 : 1.

3. A process as claimed in claim 2, **characterised** in that the promoter is added to the catalyst in an amount such that the molar ratio between the promoter and the catalyst metal is from about 5 : 1 to about 15 : 1.

4. A process as claimed in any one of claims 1-3, **characterised** in that the halogenated hydrocarbon is a chlorinated hydrocarbon.

5. A process as claimed in any one of claims 1-4, **characterised** in that there is added, as promoter, a chlorinated alkane selected among pentachloroethane, heptachloropropane, octachloropropane and chlorinated paraffin hydrocarbons having 11-22 carbon atoms.

6. A process as claimed in any one of claims 1-4, **characterised** in that there is added as promoter, hexachlorocyclohexane.

7. A process as claimed in any one of claims 1-4, **characterised** in that there is added, as promoter, an alkene selected among tetrachloroethylene and hexachloropropylene.

## Revendications

1. Dans un procédé de polymérisation en phase gazeuse des monomères d'oléfines, spécialement de l'éthylène, utilisant un catalyseur de vanadium supporté et un promoteur, le perfectionnement selon lequel le promoteur est ajouté au catalyseur avant que ce dernier soit alimenté dans la réaction de polymérisation, et selon lequel un hydrocarbure halogéné à point d'ébullition élevé est utilisé comme promoteur, l'hydrocarbure étant solide ou liquide à la pression ambiante dans tout l'intervalle de températures de 20-110°C et étant sélectionné dans le groupe comprenant :

a) les alcanes halogénés ayant la formule :

$C_nH_{2n+2-z-y}(OH)_yX_z$ dans laquelle

X = Cl, Br, F

n = 2-25

y = 0 ou 1

$1 \leq z \leq 2n + 2$

b) les cycloalcanes halogénés ayant la formule :

$C_nH_{2n-z}X_z$ dans laquelle

X = Cl, Br, F

n = 5-12

z = 1-12

c) les formes monomères ou polymères des monomères d'alcènes halogénés ayant la formule :

$C_nH_{2n-z}X_z$ dans laquelle
X = Cl, Br, F
n = 2-25
$1 \leq z \leq 2n$

2. Un procédé selon la revendication 1, caractérisé en ce que le promoteur est ajouté au catalyseur en quantité telle que le rapport molaire entre le promoteur et le catalyseur métallique soit d'environ 2 : 1 à 20 : 1.

3. Un procédé selon la revendication 2, caractérisé en ce que le promoteur est ajouté au catalyseur en quantité telle que le rapport molaire entre le promoteur et le catalyseur métallique soit d'environ 5 : 1 à environ 15 : 1.

4. Un procédé selon l'une quelconque des revendications 1-3, caractérisé en ce que l'hydrocarbure halogéné est un hydrocarbure chloré.

5. Un procédé selon l'une quelconque des revendications 1-4, caractérisé en ce que l'on ajoute comme promoteur un alcane chloré choisi parmi le pentachloroéthane, l'heptachloropropane, l'octachloropropane et les hydrocarbures paraffiniques chlorés ayant 11-22 atomes de carbone.

6. Un procédé selon l'une quelconque des revendications 1-4, caractérisé en ce que l'on ajoute, comme promoteur, l'hexachlorocyclohexane.

7. Un procédé selon l'une quelconque des revendications 1-4, caractérisé en ce que l'on ajoute, comme promoteur, un alcène sélectionné parmi le tétrachloroéthylène et l'hexachloropropylène.

## Ansprüche

1. Verfahren zur Polymerisation von Olefinmonomeren, insbesondere Äthylen, in der Gasphase unter Verwendung eines mit einem Träger versehenen Vanadiumkatalysators und eines Promotors, dadurch **gekennzeichnet**, dass der Promotor dem Katalysator zugegeben wird, bevor letzterer der Polymerisationsreaktion zugeführt wird, und dass ein hochsiedender Halogenkohlenwasserstoff als Promotor verwendet wird, der bei Umgebungsdruck durch den ganzen Temperaturbereich 20-110°C fest oder flüssig ist und aus der Gruppe gewählt ist, die aus
a) halogenisierten Alkanen der Formel
$C_nH_{2n+2-z-y}(OH)_yX_z$ worin
X = 2-25
Y = 0 oder 1
$1 \leq z \leq 2n + 2$
b) halogenisierten Cycloalkanen der Formel
$C_nH_{2n-z}X_z$ worin
X = Cl, Br, F
n = 5-12
z = 1-12
c) der monomeren oder polymeren Form von halogenisierten Alkenmonomeren der Formel
$C_2H_{2n-z}X_z$ worin
X = Cl, Br, F
n = 2-25
$1 \leq z \leq 2n$
besteht.

2. Verfahren nach Anspruch 1, dadurch **gekennzeichnet**, dass der Promotor dem Katalysator in einer solchen Menge zugegeben wird, dass das Molverhältnis zwischen dem Promotor und dem Katalysatormetall etwa 2 : 1 bis 20 : 1 ist.

3. Verfahren nach Anspruch 2, dadurch **gekennzeichnet**, dass der Promotor dem Katalysator in einer solchen Menge zugegeben wird, dass das Molverhältnis zwischen dem Promotor und dem Katalysatormetall etwa 5 : 1 bis 15 : 1 ist.

4. Verfahren nach einem der Ansprüche 1-3, dadurch **gekennzeichnet**, dass der Halogenkohlenwasserstoff ein Chlorkohlenwasserstoff ist.

5. Verfahren nach einem der Ansprüche 1-4, dadurch **gekennzeichnet**, dass als Promotor ein chloriertes Alkan zugegeben wird, das unter Pentachloräthan, Heptachlorpropan, Oktachlorpropan und Chlorparaffin-Kohlenwasserstoffen mit 11-22 Kohlenstoffatomen gewählt ist.

6. Verfahren nach einem der Ansprüche 1-4, dadurch **gekennzeichnet**, dass als Promotor Hexachlorcyclohexan zugegeben wird.

7. Verfahren nach einem der Ansprüche 1-4, dadurch **gekennzeichnet**, dass als Promotor ein Alken zugegeben wird, das unter Tetrachloräthylen und Hexaclorpropylen gewählt ist.